(19)

Europäisches
Patentamt
European
Patent Office
Office européen
des brevets

(11) **EP 3 733 493 A1**

(12) **EUROPEAN PATENT APPLICATION**

(43) Date of publication:
**04.11.2020 Bulletin 2020/45**

(51) Int Cl.:
**B62M 3/08** *(2006.01)*  **A63B 22/06** *(2006.01)*

(21) Application number: **19172625.6**

(22) Date of filing: **03.05.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Katholieke Universiteit Leuven
3000 Leuven (BE)**

(72) Inventors:
• **D'HONDT, Jordi
9080 Lochristi (BE)**
• **DIELTIENS, Sien
2018 Antwerpen (BE)**
• **JUWET, Marc
9850 Nevele (BE)**

(54) **PEDAL**

(57)    A pedal configured to couple to a pedal spindle along a coupling axis is disclosed. The pedal comprises a pedal surface for application of force by a user and a pedal frame coupled to the surface, the pedal frame supporting a first strain sensor configured to detect strain in a first direction and a second strain sensor configured to detect strain in a second direction substantially perpendicular to the first direction. The first strain sensor is disposed on a first face of the pedal frame, the pedal frame having a first frame thickness at the first face in the first direction. The second strain sensor is disposed on a second face of the pedal frame, the pedal frame having a second frame thickness at the second face in the second direction. The first frame thickness is less than the second frame thickness.

Fig. 1a

EP 3 733 493 A1

## Description

### Technical field of the invention

The present invention relates to a pedal for a bicycle.

### Background of the invention

In both recreational and competitive cycling, it is becoming more important to adapt the geometry of the bicycle to the individual cyclist. Even small changes in bicycle geometry can cause significant changes in forces acting on the human body. However, measurements of external forces on the human body while driving a bicycle are restricted because of a lack of relevant measurement tools. Consequently cyclists often rely on their personal experience instead of numerical data to fit their bicycle. This may result in maladaptive bicycle settings and pedal technique.

Traditional strain gauge based pedals tend to have shortcomings such as measuring forces in two directions only and a bulky design influencing the pedal technique during measurements. The two dimensional measurement systems generally measure anterior-posterior and normal forces. These are of interest to analyze power output and muscle fatigue but they do not address joint burden or cycling sores. Designs that include medio-lateral forces are unfavorable because of their bulkiness. If the extra volume is added superior to the pedal spindle, the cyclist's foot is lifted, the cyclist's pedal technique is changed and pedal patterns are misrepresented. If the extra volume is added inferior to the pedal spindle, the ground clearance is decreased and the pedal can touch the ground during maneuvering. Consequently, only stationary measurements are possible which are not representative of in-situ cycling.

### Summary of the invention

According to a first aspect of the present invention there is provided a pedal configured to couple to a pedal spindle along a coupling axis, the pedal comprising a pedal surface for application of force by a user and a pedal frame coupled to the surface, the pedal frame supporting a first strain sensor configured to detect strain in a first direction and a second strain sensor configured to detect strain in a second direction substantially perpendicular to the first direction. The first strain sensor is disposed on a first face of the pedal frame, the pedal frame having a first frame thickness at the first face in the first direction. The second strain sensor is disposed on a second face of the pedal frame, the pedal frame having a second frame thickness at the second face in the second direction. The first frame thickness is less than the second frame thickness.

The first direction may be substantially parallel to the coupling axis.

The second direction may be substantially perpendicular to the pedal surface.

The second direction may be substantially parallel to the pedal surface.

The pedal may further comprise a third strain sensor configured to detect strain in a third direction substantially perpendicular to the first direction and the second direction, wherein the third strain sensor is disposed on a third face of the pedal frame, the pedal frame having a third frame thickness at the third face in the third direction, and wherein the third frame thickness is greater than the second frame thickness.

The first direction may be substantially perpendicular to the pedal surface and the second direction may be substantially perpendicular to the coupling axis .

The pedal may comprise a fourth strain sensor configured to detect strain in the first direction, a fifth strain sensor configured to detect strain in the second direction, and a sixth strain sensor configured to detect strain in the third direction, wherein the first and the fourth strain sensors form a first pair of strain sensors configured to detect strain in the first direction, the second and fifth strain sensors form a second pair of strain sensors configured to detect strain in the second direction, and the third and sixth strain sensors form a third pair of strain sensors configured to detect strain in the third direction . The pedal may further comprise a fourth pair of strain sensors configured to detect strain in the first direction, a fifth pair of strain sensors configured to detect strain in the second direction, and a sixth pair of strain sensors configured to detect strain in the third direction.

Each one of a strain sensor in a pair of strain sensors may be arranged so as to contract when a force is applied in the direction in which the pair of strain sensors is configured to detect strain, and the other strain sensor in the pair of strain sensors may be arranged so as to expand when the same force is applied.

The pedal may comprise an accelerometer and/or a gyroscope.

The pedal may comprise a processing unit electrically coupled to the strain sensors and optionally to the accelerometer and/or the gyroscope, wherein the processing unit is configured to receive strain voltage data from the strain sensors and optionally motion data from the accelerometer and/or gyroscope.

The processing unit may be configured to transmit data through a wired connection. The transmission module may be configured to transmit data wirelessly.

The transmission module may be configured to transmit data using Bluetooth.

The transmission module may be configured to transmit data using ANT+.

The pedal may comprise a foot positioning system.

The pedal may have a thickness at a location of a strain sensor, in a direction perpendicular to the pedal surface on which the strain sensor is disposed, of no more than 20mm.

According to a second aspect of the present invention there is provided a pedal system comprising a pedal according to the first embodiment and a pedal casing coupled to the pedal frame.

According to a third aspect of the present invention there is provided a force sensing system comprising a pedal according to the first embodiment or a pedal system according to the second embodiment and a processing module configured to receive data from the pedal, the processing module being configured to determine a force exerted on the pedal along at least one axis in dependence upon data received from the pedal.

According to a fourth aspect of the present invention there is provided a bicycle comprising at least one pedal according to the first aspect.

According to a fifth aspect of the present invention there is provided a bicycle comprising at least one pedal system according to the second aspect.

According to a sixth aspect of the present invention there is provided a bicycle comprising at least one force sensing system according to the third aspect.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

**Brief description of the drawings**

Figure 1a is a schematic perspective view of a pedal according to embodiments of the present invention from a first viewpoint;

Figure 1b is a schematic perspective view of the pedal of Figure 1a from a second viewpoint;

Figure 1c is a plan view of the pedal of Figure 1a;

Figure 1d is a side view of a section S of the pedal of Figure 1a;

Figure 2 is a side view of a bicycle comprising a pedal according to embodiments of the present invention in a global reference frame;

Figure 3a is a schematic perspective view of a modified pedal according to embodiments of the present invention from a first viewpoint;

Figure 3b is a schematic perspective view of the pedal of Figure 3a from a second viewpoint;

Figure 3c is a plan view of the pedal of Figure 3a;

Figure 4 is a circuit diagram of a Wheatstone bridge;

Figure 5a is a schematic perspective view of a pedal system comprising a pedal according to embodiments of the present invention and a pedal casing;

Figure 5b is a schematic perspective view of the pedal casing of Figure 5a,

Figure 6 is a plot of the X, Y, and Z forces determined using a pedal according to embodiments of the present invention.

**Description of illustrative embodiments**

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms before, after, and the like in the description and the claims are used for descriptive purposes and not necessarily for describing relative positions. It is to be understood that the terms so used are interchangeable with their antonyms under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. The term "comprising" therefore covers the situation where only the stated features are present and the situation where these features and one or more other features are present. Thus, the scope of the expression "a device comprising means A and B" should not be interpreted as being limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly, it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

Furthermore, some of the embodiments are described herein as a method or combination of elements of a method that can be implemented by a processor of a computer system or by other means of carrying out the function. Thus, a processor with the necessary instructions for carrying out such a method or element of a method forms a means for carrying out the method or element of a method. Furthermore, an element described herein of an apparatus embodiment is an example of a means for carrying out the function performed by the element for the purpose of carrying out the invention.

In the description provided herein, numerous specific details are set forth. However, it is understood that embodiments of the invention may be practised without these specific details. In other instances, well-known methods, structures and techniques have not been shown in detail in order not to obscure an understanding of this description.

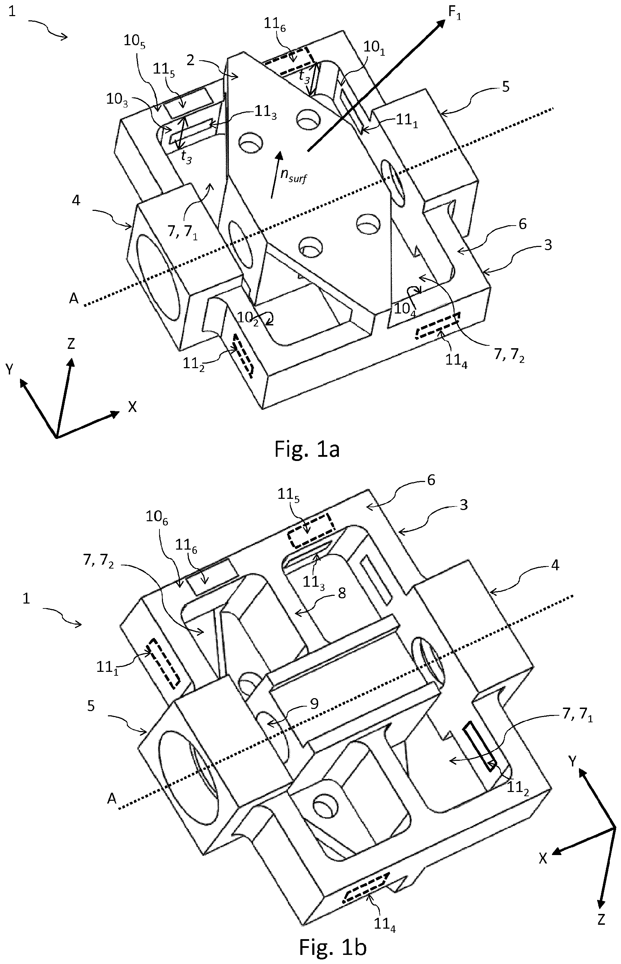

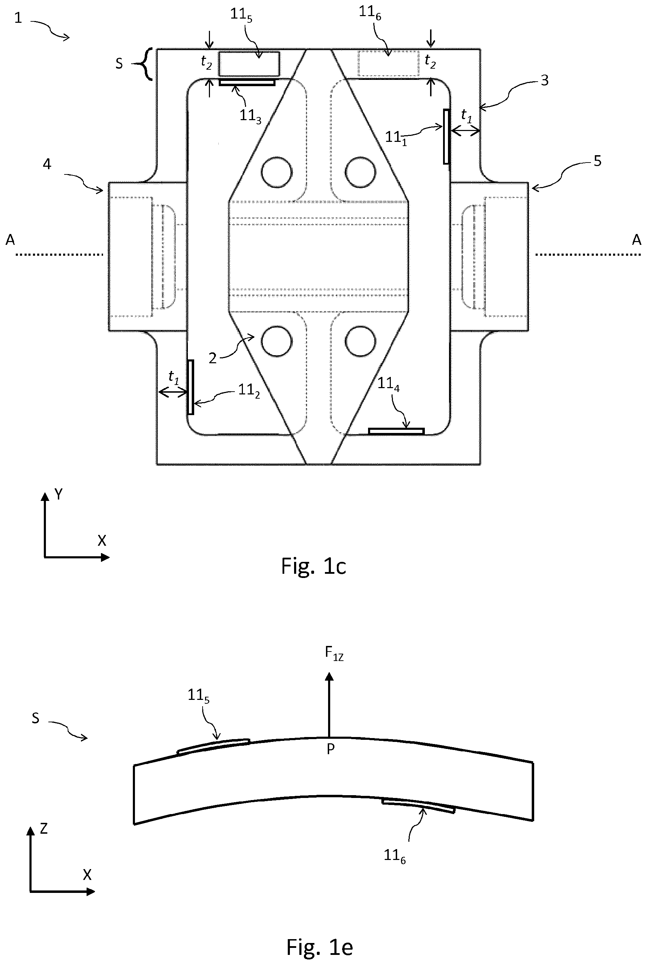

Referring to Figures 1a to 1c, a pedal 1 according to embodiments of the present invention is shown. The pedal 1 comprises a pedal surface 2 for application of force by a user and a pedal frame 3 coupled to the pedal surface 2. Force can be applied to the pedal surface 2 directly, e.g. by direct contact between the user's foot or footwear and the pedal surface 2, or indirectly, if an intermediate element such as a casing is present between the pedal surface 2 and the user's foot or footwear. The pedal surface 2 is generally flat and has a surface normal $n_{surf}$. The pedal 1 is configured to couple to a pedal spindle (not shown) along a coupling axis A, for example via bearings (not shown) held within first and second housings 4, 5 comprised in the frame 4 and spaced apart along the coupling axis A.

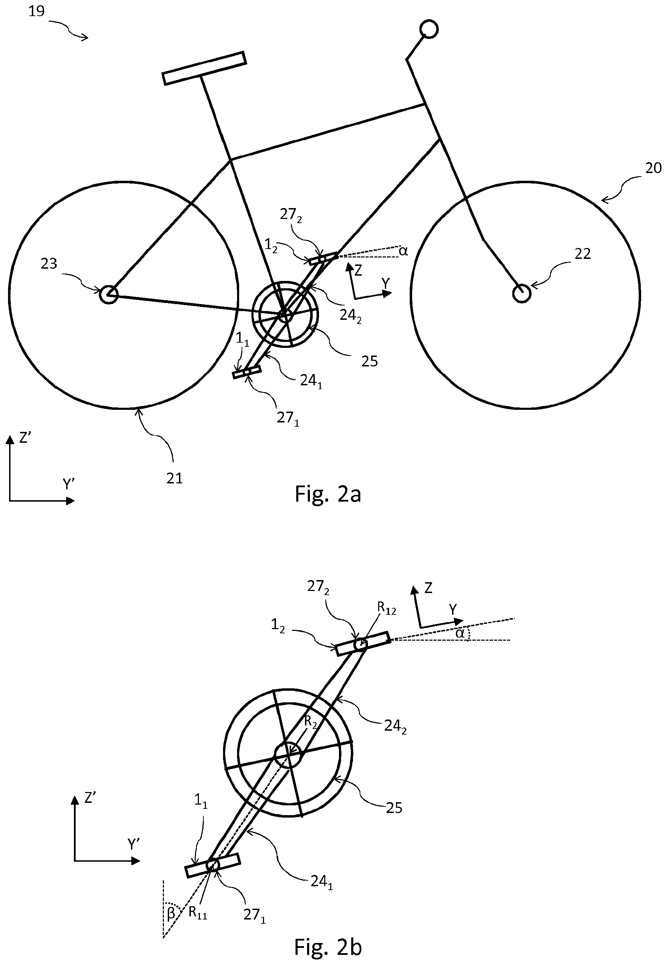

Referring to Figure 2a, a bicycle 18 comprising a first pedal $1_1$ and a second pedal $1_2$ according to embodiments of the present invention is shown in a global reference frame. The bicycle 19 has front and rear wheels 20, 21 respectively, the front wheel having a first axle 22 and the second wheel having a second axle 23. The pedals $1_1$, $1_2$ of the bicycle 19 are each connected to a respective crank arm $24_1$, $24_2$ via a pedal spindle $27_1$, $27_2$. Each pedal 1 is configured to rotate about its respective spindle 27 about a pedal centre of rotation $R_{11}$ (for the first pedal $1_1$) and $R_{12}$ (for the second pedal $1_2$), see also Figure 2b. At the opposite end of the crank arm 24 to the pedal 1, each crank arm 24 is connected to the chain wheel 25 and is configured to rotate about a crank centre of rotation $R_2$.

In the global reference frame, three perpendicular directions X', Y', and Z' are defined. The direction X' is out of the plane of the diagram and is parallel to the coupling axis A for coupling the pedal 1 to the pedal spindle 18. The direction Y' is defined as the direction which is parallel to a line passing through the axles 22, 23 of both wheels 20, 21. This direction is in general parallel to the surface on which the bike 19 stands. The direction Z' is defined as the direction which is perpendicular to the direction Y' and the direction X'.

The direction X' is also referred to as the medio-lateral direction. The direction Y' is also referred to as the anterior-posterior direction. The direction Z' is also referred to as the normal direction. Herein, where reference is made to an anterior-posterior force, it is to be understood as a force in the Y' direction; where reference is made to a medio-

lateral force, it is to be understood as a force in the X' direction; where reference is made to a normal force, it is to be understood as a force in the Z' direction.

Referring again to Figures 1a to 1c, three perpendicular axes for the pedal 1 in the pedal reference frame can be defined based on the forces expected to be applied to the pedal: a first axis X which is parallel to the coupling axis A; a second axis Y, which is parallel to the plane of the pedal surface 2, and a third axis Z, which is perpendicular to the pedal surface 2.

The pedal reference frame is in general rotated with respect to the global reference frame by an angle $\alpha$ about the centre of rotation R of the pedal cranks. Therefore the direction Z' is invariant between the pedal reference frame and the global reference frame, because the pedal spindle extends along a direction parallel to the axis of rotation of the pedal cranks. The direction Y' in the global frame and the direction Y in the pedal frame are in general not collinear; similarly, the direction X' in the global frame and the direction X in the pedal frame are in general not collinear. The angle $\alpha$ for each pedal may be different.

Forces or other vectors **b** measured in the pedal reference frame can be transformed into the global reference frame according to equation 1:

$$\begin{pmatrix} b_{y\prime} \\ b_{z\prime} \end{pmatrix} = \begin{pmatrix} \cos\alpha & -\sin\alpha \\ \sin\alpha & \cos\alpha \end{pmatrix} \cdot \begin{pmatrix} b_y \\ b_z \end{pmatrix} \qquad (1)$$

where a vector **b** in the pedal reference frame has a component $b_x$ in the X direction in the pedal reference frame and a component $b_y$ in the Y direction in the pedal reference frame. $b_{x\prime}$ denotes the component of the vector **b** in the X' direction in the global reference frame. $b_{y\prime}$ denotes the component of the vector **b** in the Y' direction in the global reference frame.

The present invention is based at least in part on the insight that sensitivity to forces in the medio-lateral and anterior-posterior directions, which tend to be much smaller than forces in the normal direction, can be improved by choosing the dimensions of the pedal 1 in appropriate directions, as will be described in more detail hereinafter.

The pedal frame 3 comprises an outer frame part 6 having a generally rectangular shape with a central aperture 7 divided by a bridging section 8.

The bridge section 8 divides the central aperture 7 in the Y direction, that is, the central aperture has two adjacent sections $7_1$, $7_2$ respectively which are spaced apart in the X direction by the bridge section 8. The bridge section 8 preferably also comprises a through-hole 9 in the X direction for receiving the pedal spindle. The bridge section 8 at least partially supports the pedal surface 2. For example, referring to Figures 1a and 1b, the bridge section 8 may be monolithic with the pedal surface 2. Additionally or alternatively, the pedal surface 2 may be mechanically coupled to the bridge section 8 by means of screws or other fastening elements (not shown).

The pedal surface 2 is at least partially supported by the outer frame part 6. For example, referring to Figures 1a to 1c, the pedal surface 2 may be monolithic with the outer frame part 6. Additionally or alternatively, the pedal surface 2 may be mechanically coupled to the outer frame part 6 by means of screws or other fastening elements (not shown).

The outer frame part 6 has a plurality of surfaces for receiving strain sensors, each surface having a normal which is preferably substantially parallel to one of the three directions X, Y, or Z. Where a normal and an axis are described as being substantially parallel, it is meant that the angle between the normal and the axis is less than 30°, more preferably less than 20°, still more preferably less than 10°. However, it will be understood by the skilled person that even in the case of a surface normal not being substantially parallel to the direction in question, a strain sensor can still sense strain along that direction, although the signal to noise ratio will be greater.

For example, referring to Figures 1a to 1c, the outer frame part 6 comprises a first surface $10_1$ having a surface normal $n_{101}$ which is substantially parallel to the first axis X. The first surface $10_1$ is an interior surface of the pedal frame 3, that is, its normal points towards the central aperture 7 rather than away from the central aperture 7. The outer frame part 6 comprises a second surface $10_2$ which is an interior surface and has a surface normal $n_{102}$ which is substantially antiparallel to the surface normal $n_{101}$ of the first surface $10_1$. A first strain sensor $11_1$ is disposed on the first surface $10_1$ and a second strain sensor $11_2$ is disposed on the second surface $10_2$. The first strain sensor $11_1$ and the second strain sensor $11_2$ are arranged in a diagonal configuration, that is, having the same position in the Z direction and different positions in the X and Y directions. Each sensor $11_1$, $11_2$ is configured to output an electrical signal in response to a deformation, or strain, of the sensor. The amount of deformation of the sensor is proportional to the amount of deformation of the outer frame part at the location of each sensor $11_1$, $11_2$. The first strain sensor $11_1$ and the second strain sensor $11_2$ form a first pair $12_1$ of strain sensors.

The outer frame part 6 has a first thickness $t_1$ at the locations of the first and second strain sensors $11_1$, $11_2$ as measured in the X direction.

Referring still to Figures 1a to 1c, the outer frame part 6 comprises a third surface $10_3$ having a surface normal $n_{103}$ which is substantially parallel to the second axis Y. The third surface $10_3$ is an interior surface of the pedal frame

EP 3 733 493 A1

3, that is, its normal $n_{103}$ points towards the central aperture 7 rather than away from the central aperture. The outer frame part 6 comprises a fourth surface $10_4$ which is an interior surface and has a surface normal $n_{104}$ which is substantially antiparallel to the surface normal $n_{103}$ of the third surface $10_3$. A third strain sensor $11_3$ is disposed on the third surface $10_3$ and a fourth strain sensor $11_4$ is disposed on the fourth surface $10_4$. The dashed lines indicating the fourth strain sensor $11_4$ indicate that it is disposed on a face of the pedal frame 3, namely the fourth surface $10_4$, that is not shown in Figure 1a. The third strain sensor $11_3$ and the fourth strain sensor $11_4$ are arranged in a diagonal configuration, that is, having the same position in the Z direction and different positions in the X and Y directions. Each sensor is configured to output an electrical signal in response to a deformation, or strain, of the sensor. The amount of deformation of the sensor is proportional to the amount of deformation of the outer frame part at the location of each sensor $11_3$, $11_4$. The third strain sensor $11_3$ and the fourth strain sensor $11_4$ form a second pair $12_2$ of strain sensors.

The outer frame part 6 has a second thickness $t_2$ at the locations of the third and fourth strain sensors $11_3$, $11_4$ as measured in the Y direction.

Referring still to Figures 1a to 1c, the outer frame part 6 comprises a fifth surface $10_5$ having a surface normal $n_{105}$ which is substantially parallel to the third axis Z. The fifth surface $10_5$ is an exterior surface of the pedal frame 3, that is, its normal $n_{105}$ points away from the central aperture 7 rather than towards the central aperture 7. The outer frame part 6 comprises a sixth surface $10_6$ which is an exterior surface and has a surface normal $n_{106}$ which is substantially antiparallel to the surface normal $n_{105}$ of the fifth surface $10_5$. A fifth strain sensor 11s is disposed on the fifth surface $10_5$ and a sixth strain sensor $11_6$ is disposed on the sixth surface $10_6$. The fifth strain sensor 11s and the sixth strain sensor $11_6$ are arranged in a diagonal configuration, that is, having the same position in the Y direction and different positions in the X and Z directions. Each sensor is configured to output an electrical signal in response to a deformation, or strain, of the sensor. The amount of deformation of the sensor is proportional to the amount of deformation of the outer frame part at the location of each sensor $11_5$, $11_6$. The fifth strain sensor 11s and the sixth strain sensor $11_6$ form a third pair $12_3$ of strain sensors.

The outer frame part 6 has a third thickness $t_3$ at the locations of the fifth and sixth strain sensors $11_5$, $11_6$ as measured in the Z direction.

When a force is applied to the pedal 1 having a component in a particular direction X, Y, or Z, each strain sensor in the pair 12 of strain sensors for measuring strain in that direction undergoes a deformation. Each strain sensor is configured to output an electrical signal which is proportional to the magnitude of the deformation. Using these electrical signals, the force applied to the pedal can be deduced, as will be described in more detail hereinafter.

The third frame thickness $t_3$ is greater than the second frame thickness $t_2$ and the first frame thickness $t_1$. The third frame thickness $t_3$ is preferably at least twice the first frame thickness $t_1$, i.e. preferably $t_3 \geq 2t_1$, more preferably at least three times the first frame thickness $t_1$, i.e. more preferably $t_3 \geq 3t_1$.

The second frame thickness $t_2$ is preferably greater than the first frame thickness $t_1$. However, in some embodiments the second frame thickness $t_2$ is equal to the first frame thickness $t_1$.

One example set of dimensions, which is particularly suitable for measurements in laboratory conditions, is $t_3$ = 10 mm, $t_2$ = 4 mm, $t_1$ = 2 mm. Another example set of dimensions, which is particularly suitable for outside cycling conditions in which the pedal may be subjected to high-impact forces, is $t_3$ = 15 mm, $t_2$ = 5 mm, $t_1$ = 4 mm. The increased dimensions in this case relative to the laboratory case helps to reduce the likelihood of plastic deformation occurring on impact of the pedal, for example with a road, wall, or other hard surface, increasing the lifespan of the pedal. Such type of impact is less likely to occur in a laboratory setting, and so smaller thickness values can be used, which allow more accurate strain measurements. Other thickness values are possible within the scope of the present invention.

As the forces applied to the pedal 1 in the normal direction are generally much greater than the forces applied in the medio-lateral and anterior-posterior direction, by providing a greater frame thickness in the Z direction to those in the X and Y directions, the force required to produce a displacement in the X and Y directions is reduced as compared to the force required to produce the same displacement in the Z direction. This allows the same or similar type strain sensors to be used for force sensing in each direction without having a reduced sensitivity to the medio-lateral and anterior-posterior forces, thus simplifying the design and integration of the sensors and reducing costs. Although the X and Y directions are not in general exactly parallel to the medio-lateral and anterior-posterior directions respectively, the angle $\alpha$ tends to be small in practice and so the force sensitivity advantages are retained even when the pedal reference frame and the global reference frame are not coincident. The angle $\alpha$ generally tends to vary between -5 and 30 degrees.

By integrating the strain sensors 11 into the pedal frame 2, the impact on the form factor of the pedal 1 is minimal, reducing the effect on the cycling technique of the user. This allows for more representative measurements of the user's technique.

Although the pedal 1 as described in relation to Figures 1a to 1c comprises six strain sensors in three pairs, each pair arranged for measuring a strain in one of three perpendicular directions, thus allowing three degree of freedom force sensing, a pedal according to embodiments of the present invention may comprise two pairs of strain sensors, each pair arranged for measuring a strain in one of three perpendicular directions. Such a pedal is capable of two degree of freedom force sensing and still allows the same or similar type strain sensors to be used for force sensing in each direction without having a reduced sensitivity to medio-lateral or anterior-posterior forces. For example, in some embodiments the fifth and sixth strain sensors $11_5$, $11_6$ may not be provided and the medio-lateral and anterior-posterior forces may be measured while retaining the advantages described above. In some embodiments, the third and fourth strain sensors $11_3$, $11_4$ may not be provided and the medio-lateral and normal forces may be measured. In some embodiments, the first and second strain sensors $11_1$, $11_2$ may not be provided and the anterior-posterior and normal forces may be measured. Such pedals also have the advantage of reduced impact on the form factor of the pedal 1.

Each sensor 11 in a pair of sensors 12 is positioned such that one of the sensors expands under application of a particular force, and the other sensor contracts under application of the same force. For example, referring to Figure 1a and considering the fifth sensor $11_5$ and the sixth sensor $11_6$ under the application of a force $F_1$ at the pedal surface 2 which is not parallel to any of the directions X, Y, and Z: the force $F_1$ has a component $F_{1Z}$ in the Z direction at the midpoint P of a section S of the pedal frame 3 which supports the third pair of sensors $12_3$. Referring to Figure 1d, which shows a view along the Y direction of the section S of under the application of the force $F_1$, it can be seen that this component $F_{1Z}$ will cause the fifth sensor 11s to expand and the sixth sensor $11_6$ to contract. Although the force $F_1$ is applied at the pedal surface 2 and not directly at the section S, the section S will experience a force due to the mechanical coupling of the pedal surface 2 to the pedal frame 3. In some embodiments, the two sensors 11 in a pair of sensors 12 have the same position in the two directions perpendicular to the surface normal of the surface on which they are disposed - that is, the two sensors in a pair of sensors are spaced apart only in the direction of the surface normal. The strain in this case corresponds to a moment about the point of application of force (i.e. the position of the foot), and not the force itself. Thus the position of the foot relative to each strain sensor needs to be known in order to calculate the force. This can be captured in the calibration matrix as described hereinafter; however, this means that there is a different calibration matrix for each foot position and so if the foot moves, the calibration needs to be redone. For this reason it is preferable that the pedal comprises a foot positioning system, such as an aperture (not shown) shaped for receiving and retaining a cleat of a cycling shoe, or a strap (not shown).

In embodiments wherein the two sensors 11 are spaced apart in the direction of the surface normal and also in one or more of the two directions perpendicular to the surface normal, no foot positioning system needs to be provided. For example, for the configuration of sensors shown in Figures 1a to 1c, no foot positioning system is required. This is also referred to as a diagonal configuration. Such a pedal according to embodiments of the present invention is more versatile and does not require additional specialised equipment, such as a specialised cycling shoe, for its use.

By using one or more pairs of sensors for sensing force in each perpendicular direction, each sensor in a pair of sensors positioned such that one sensor of the pair contracts and the other sensor of the pair expands in response to the same force, the signal to noise ratio can be improved by taking the difference of the two sensor readings.

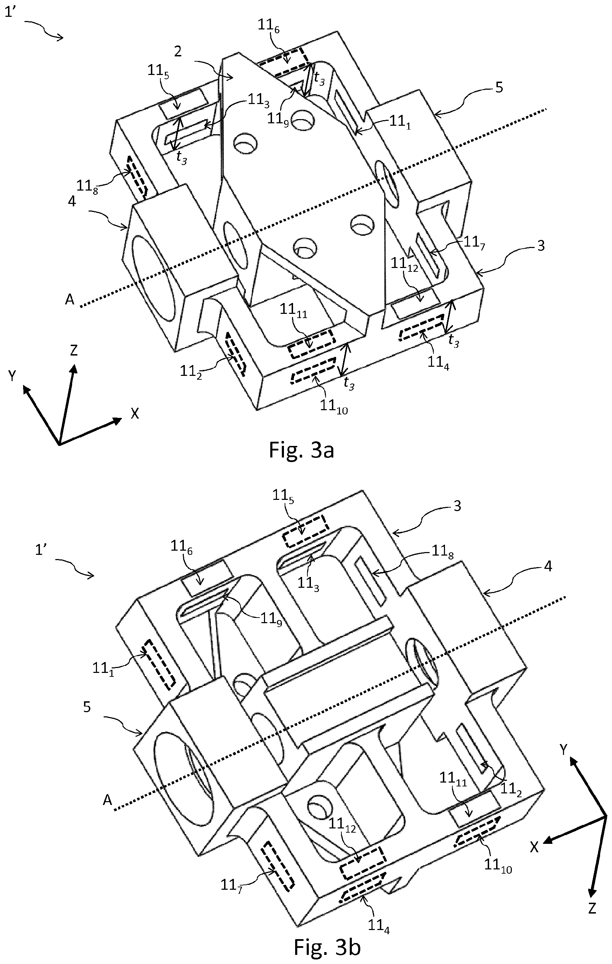

The pedal 1 may comprise additional pairs 12 of strain sensors. Referring to Figures 3a to 3c, a second pedal 1' according to embodiments of the present invention is similar to the first pedal 1 and additionally comprises a fourth $12_4$, fifth $12_5$, and sixth $12_6$ pair of strain sensors.

The fourth pair of strain sensors $12_4$ consists of a seventh strain sensor $11_7$ and an eighth strain sensor $11_8$. The seventh strain sensor $11_7$ preferably has substantially the same X and Z location as the first strain sensor $11_1$ and is spaced apart from the first strain sensor $11_1$ in the Y direction. The eighth strain sensor $11_8$ preferably has has substantially the same X and Z location as the second strain sensor $11_2$ and is spaced apart from the second strain sensor $11_2$ in the Y direction. However, the seventh strain sensor $11_7$ and the first strain sensor $11_1$ need not have the same position in the X and Z directions. Any mismatch in positioning can be accounted for in the calibration procedure described hereinafter. The same applies for the eighth strain sensor $11_8$ and the second strain sensor $11_2$.

The outer frame part 6 has a first thickness $t_1$ at the locations of the seventh and eighth strain sensors $11_7$, $11_8$ as measured in the X direction.

The fifth pair of strain sensors 12s consists of a ninth strain sensor $11_9$ and a tenth strain sensor $11_{10}$. The ninth strain sensor $11_9$ preferably has substantially the same Y and Z location as the third strain sensor $11_3$ and is spaced apart from the third strain sensor $11_3$ in the X direction. The tenth strain sensor $11_{10}$ preferably has has substantially the same Y and Z location as the fourth strain sensor $11_4$ and is spaced apart from the fourth strain sensor $11_4$ in the Z direction. However, the ninth strain sensor $11_9$ and the third strain sensor $11_3$ need not have the same position in the Y and Z directions. A mismatch in positioning can be accounted for in the calibration procedure described hereinafter. The same applies for the tenth strain sensor $11_{10}$ and the fourth strain sensor $11_4$.

The outer frame part 6 has a second thickness $t_2$ at the locations of the ninth and tenth strain sensors $11_9$, $11_{10}$ as measured in the Y direction. The sixth pair of strain sensors $12_6$ consists of an eleventh strain sensor $11_{11}$ and a twelfth strain sensor $11_{12}$. The eleventh strain sensor $11_{11}$ preferably has substantially the same X location as the fifth strain sensor 11s and is spaced apart from the fifth strain sensor 11s in the Y and Z directions. The twelfth strain sensor $11_{12}$ preferably has substantially the same X location as the sixth strain sensor $11_6$ and is spaced apart from the sixth strain sensor $11_6$ in the Y and Z directions. However, the eleventh strain sensor $11_{11}$ and the fifth strain sensor $11_5$ need not have the same position in the X direction. A mismatch in positioning can be accounted for in the calibration procedure described hereinafter. The same applies for the twelfth strain sensor $11_{12}$ and the sixth strain sensor $11_6$.

The outer frame part 6 has a third thickness $t_3$ at the locations of the eleventh and twelfth strain sensors $11_{11}$, $11_{12}$ as measured in the Z direction.

Although in the examples described herein the strain sensors are described as being disposed on specific surfaces of the pedal frame 3, the present invention is not limited thereto. For example, the third, fourth, ninth, and tenth strain sensors need not be disposed on inner surfaces of the pedal frame 3. One or more of these strain sensors may be disposed on outer surfaces of the pedal frame 3, provided that one sensor of each pair of sensors is arranged to contract under the application of a specific force and the other sensor is arranged to expand under application of the same force. However, the strain sensors 11 are preferably located on inner surfaces of the pedal frame 3 as far as possible, as this allows them to be protected from impacts on the pedal 1.

Although each strain sensor is preferably arranged to measure strain in one direction only, also referred to as the intended strain measurement direction, practically each sensor will measure components of the strain in the other two perpendicular directions. This can be due to cross-coupling of strains, small transverse deformation of the strain sensor in the directions perpendicular to the intended strain measurement direction, and/or misalignment of the strain gauges.

A calibration matrix can be calculated in order to account for such cross-sensitivities. For example, $N$ known forces and torques can be applied to the pedal in each direction and the resulting strain measurements can be used to determine the calibration matrix according to equation 2:

$$\begin{bmatrix} C_{11} & C_{12} & C_{13} \\ C_{21} & C_{22} & C_{23} \\ C_{31} & C_{32} & C_{33} \end{bmatrix} = \left( \begin{bmatrix} m_{FX1} & m_{FX100} \\ m_{FY1} \cdots m_{FY100} \\ m_{FZ1} & m_{FZ100} \end{bmatrix} * \begin{bmatrix} m_{FX1} & m_{FX100} \\ m_{FY1} \cdots m_{FY100} \\ m_{FZ1} & m_{FZ100} \end{bmatrix}^T \right)^{-1} \qquad (2)$$

$$* \begin{bmatrix} m_{FX1} & m_{FX100} \\ m_{FY1} \cdots m_{FY100} \\ m_{FZ1} & m_{FZ100} \end{bmatrix}^T * \begin{bmatrix} F_{X1} & F_{X100} \\ F_{Y1} \cdots F_{Y100} \\ F_{Z1} & F_{Z100} \end{bmatrix}$$

where $C_{ij}$ are the elements of the calibration matrix **C**, $m_{FXn}$ denotes the $n$-th measured voltage in the X direction, $m_{FYn}$ denotes the $n$-th measured voltage in the Y direction, $m_{FZn}$ denotes the $n$-th measured voltage in the Z direction, $F_{Xn}$ denotes the n-th applied force in the X direction, $F_{Yn}$ denotes the $n$-th applied force in the Y direction, and $F_{Zn}$ denotes the $n$-th applied force in the Z direction. The measured voltages in each direction are preferably the output voltages $V_{out}$ of a respective Wheatstone bridge (as will be described in more detail hereinafter). However, in some embodiments, the measured voltage may be the difference between the voltage output of a pair of strain sensors. In some embodiments, the measured voltage may be a single voltage output of one strain sensor.

In a 'live' measurement situation, unknown forces $F_X$, $F_Y$, $F_Z$ can be determined from measured strain sensor voltages $m_{FX}$, $m_{FY}$, $m_{FZ}$ using the calibration matrix according to equation 3:

$$\begin{bmatrix} C_{11} & C_{12} & C_{13} \\ C_{21} & C_{22} & C_{23} \\ C_{31} & C_{32} & C_{33} \end{bmatrix} * \begin{bmatrix} m_{FX} \\ m_{FY} \\ m_{FZ} \end{bmatrix} = \begin{bmatrix} F_X \\ F_Y \\ F_Z \end{bmatrix} \qquad (3)$$

The measured strain sensor voltages are determined based on the strain sensors available for measuring strain in each direction. The forces in the global reference frame can then be determined by applying equation 1.

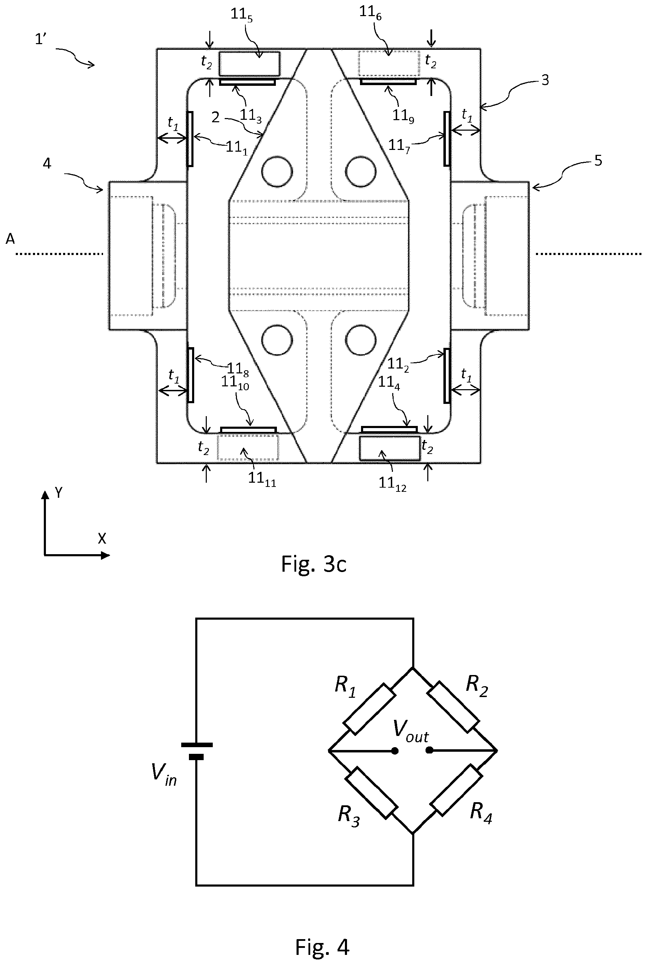

Referring to Figure 4, the set of available strain sensors for measuring strain in each direction are preferably arranged in a Wheatstone bridge configuration. Each strain sensor is denoted by a resistor $R_i$. Depending on the number of strain sensors provided, one or more of the resistors may be of fixed resistance. For example, for the pedal 1, where two strain sensors are available for measuring strain in each direction, resistors $R_1$ and $R_2$ are fixed value resistors and variable resistors $R_3$ and $R_4$ each represent one strain gauge of the pair of strain gauges for a particular direction. For example, the first strain sensor $11_1$ may be represented by variable resistor $R_3$ and the second strain sensor $11_2$ may be represented by variable resistor $R_4$.

For the modified pedal 1', where four strain sensors are available for measuring strain in each direction, each of the resistors in the Wheatstone bridge is variable and represents a strain gauge.

The output voltage $V_{out}$ of the Wheatstone bridge can be expressed as a function of the input voltage $V_{in}$ and the resistance values according to equation 4:

$$V_{out} = \left( \frac{R_1}{R_1 + R_2} - \frac{R_4}{R_3 + R_4} \right) V_{in} \qquad (4)$$

The output voltage for each direction (that is, the output voltage when considering all of the strain sensors which are configured to detect strain in a specific direction) can then be input into calibration matrix equation 2 to determine the force in each direction. For example, for the modified pedal 1', the measured voltage for the force in the Y direction in equation 2, i.e. the component $m_{FY}$, is determined by measuring $V_{out}$ for a Wheatstone bridge having the following resistance to strain sensor correspondences: $R_1$: third strain sensor $11_3$; $R_2$: ninth strain sensor $11_9$; $R_3$: tenth strain sensor $11_{10}$; $R_4$: fourth strain sensor $11_4$.

This full Wheatstone bridge configuration can help to amplify the electrical signals and reduce the effect of external factors such as humidity and temperature on the measurements. By using the difference between two strain gauges in the stain measurement calculation, the output signal can be maximised as the negative strain gauge signal of a contracting sensor region is subtracted from a positive strain gauge signal of an expanding sensor region .

A calibration process may be carried out on a pedal according to embodiments of the present invention in order to determine relationships between multidirectional forces applied to the pedal and the output signals of the strain gauges. This can help to compensate for any cross-sensitivity between strain gauges and/or construction inconsistencies of the pedal. A dynamical calibration is not necessarily required as pedalling frequencies tend to stay below 5Hz.

By using a calibration matrix calculation as described hereinbefore for determining the forces, the precise positioning of the strain sensors is not essential in order to obtain accurate force measurements. Small misalignments and cross-sensitivities between strain gauges can be accounted for in the calibration. This reduces production costs as the precision required is less.

As explained hereinbefore, the pedal 1 is configured to pivotally connect to a pedal spindle of a bicycle and thus the pedal coordinate system at a given point in time is local and has no fixed attitude in the global reference frame of the bicycle. In order to allow transformation of forces from the pedal reference frame to the global (bicycle) reference frame, the orientation of the pedal may be recorded, for example using a gyroscope and/or accelerometer disposed on the pedal. One suitable sensor is the InvenSense MPU-6050 sensor (TDK InvenSense). Other possibilities for measuring the pedal orientation are an incremental encoder, an absolute encoder, a magnetic angle position sensor.

In order to relate the forces to their position within a pedal cycle, the orientation of the crank arm may be recorded. Referring to Figure 2b, the crank arm angle, also referred to as the pedal arm angle, is the angle between a line drawn between the crank centre of rotation $R_2$ and the pedal centre of rotation $R_1$ of the pedal in question, and the Z' direction in the global reference frame. The pedal arm angle can be measured for example using a pedal angle sensor, which is preferably an inertial measurement until such as an accelerometer or gyroscope, disposed on the pedal frame 3. Alternatively, in some embodiments, a mechanical absolute encoder, optical absolute encoder, magnetic absolute encoder, magnetic angle position sensor, or capacitive absolute encoder can be mounted on the crank for measuring the pedal arm angle. A low-cost absolute incremental encoder may be built by placing a toothed disk over the crank, fixated on the rotating pedal arm, and an optical sensor fixated on the frame. The sensor is configured to count the gaps, starting from a wider reference gap.

The transformed forces can be used for example to calculate the pedaling efficiency, i.e. the percentage of the pedal force that produces pedaling power, for example according to equation 5:

$$\text{efficiency} = \frac{\int_0^{360} EF dt}{\int_0^{360} RF dt} \qquad (5)$$

where $EF$ is the effective force generated by the cyclist, i.e. the component of the force generated by the cyclist that is directed tangentially to the circular path of the pedal spindle in the global reference frame as it rotates around the crank centre of rotation, and $RF$ is the resultant of the forces in the Z' and Y' directions in the global reference frame. The integrals are done over one full pedal cycle.

In some embodiments, no processing apparatus is integrated into the pedal and the strain gauge sensors are wired directly to an external processing unit such as a data acquisition system supported by a bicycle or the user of a bicycle to which the pedal is configured to couple. For example, the external processing unit may be carried in a backpack by the user, may be carried in a bike bag supported by the bicycle, may be supported on a luggage rack or frame of the bicycle.

The bridge section 8 may comprise a cut-out for receiving a processing unit (not shown). In embodiments of the present invention the pedal comprises the processing unit. The processing unit may comprise an inertial measurement unit (IMU). The IMU comprises one or both of an accelerometer, such as a biaxial MEMS accelerometer, and a gyroscope, such as a MEMS gyroscope. The accelerometer is configured to measure acceleration of the pedal in directions perpendicular to the coupling axis. The gyroscope is configured to measure the pedal angle and pedal arm angle.

The processing unit is configured to receive measurements from the strain gauge sensors and optionally from the IMU if present. For example, the strain gauge sensors may be connected to the processing unit by a wired connection and/or wireless connection. This may include additional electric and/or electronic components, such as an additional processor and/or memory for detecting, communicating, and/or otherwise processing signals of the sensors before transmission to the processing unit.

In some embodiments, the processing unit comprises a memory configured to store raw data received from the strain gauge sensors and optionally from the IMU, and a processor for performing processing on the raw data to produce processed data. For example, the processor may be configured to determine forces applied to the pedal, optionally using a calibration matrix. The processing unit comprises a transmission unit configured to transmit the processed and/or raw data to a computing device, such as a smartphone, cycling computer, laptop, or other suitable computing device.

In some embodiments, the processing unit comprises a memory configured to store raw data received from the strain gauge sensors and optionally from the IMU, and a transmission unit configured to transmit the raw data to a computing device, such as a smartphone, cycling computer, laptop, or other suitable computing device. The computing device may be configured to perform processing on the raw data, for example to determine forces applied to the pedal optionally using a calibration matrix. The computing device may be configured to combine the data received from the processing unit with data received from one or more other devices, such as a bicycle speed sensor. The computing device may be configured to determine a mean pedal cycle graph for multiple pedal cycles and to compare mean pedal cycle graphs based on pedal cadence, cycling speed and acceleration, or based on externally input factors such as bicycle settings, bicycle types, user parameters, environmental factors. The statistics package spmld may be used for such comparison.

The memory may be a volatile memory or a non-volatile memory. The memory may include one or more of a read only memory (ROM), random access memory (RAM), a flash memory, an electronic erasable program read only memory (EEPROM), or other type of memory. The memory may be removable from the processing unit, such as a secure digital (SD) memory card. In a particular non-limiting, exemplary embodiment, a computer-readable medium can include a solid-state memory such as a memory card or other package that houses one or more non-volatile read-only memories. Further, the computer-readable medium can be a random access memory or other volatile rewritable memory. Additionally, the computer-readable medium can include a magnetooptical or optical medium, such as a disk or tapes or other storage device. Accordingly, the disclosure is considered to include any one or more of a computer-readable medium and other equivalents and successor media, in which data or instructions may be stored.

The memory is a non-transitory computer-readable medium and is described to be a single medium. However, the term "computer-readable medium" includes a single medium or multiple media, such as a centralized or distributed memory structure, and/or associated caches that are operable to store one or more sets of instructions and other data. The term "computer-readable medium" shall also include any medium that is capable of storing, encoding or carrying a set of instructions for execution by a processor or that cause a computer system or processing unit to perform any one or more of the methods or operations disclosed herein.

The transmission unit provides for data and/or signal communication from the instrumented pedal to an external device such as a bicycle computer, mobile phone or other computing device. The transmission unit is configured to communicate the data using any operable connection. An operable connection may be one in which signals, physical communications, and/or logical communications may be sent and/or received. An operable connection may include a physical interface, an electrical interface, and/or a data interface. The transmission unit may be configured to communicate wirelessly, and as such include one or more antennae. The transmission apparatus provides for wireless communications in any now known or later developed format. Although the present specification describes components and functions that may be implemented in particular embodiments with reference to particular standards and protocols, the invention is not limited to such standards and protocols. For example, standards for Internet and other packet switched network transmission (e.g., TCP/IP, UDP/IP, HTML, HTTP, HTTPS) represent examples of the state of the art. Such standards are periodically superseded by faster or more efficient equivalents having essentially the same functions. Bluetooth®, ANT+™, ZigBee, WiFi, and/or AIREA™ standards may also, or alternatively, be used. Accordingly, replacement standards and protocols having the same or similar functions as those disclosed herein are considered equivalents thereof.

The data of the pedal may be analyzed in real-time by the processor and/or the computing device to advise the cyclist about correct pedal movement, for example using sound alerts and/or a display, which may be mounted on the bicycle or provided separately. Advice can concern the ratio between propelling power and pedal force, the amount of unwanted medial-lateral forces, the shape of the pedal loading graphs, the difference between left and right pedal technique etc.

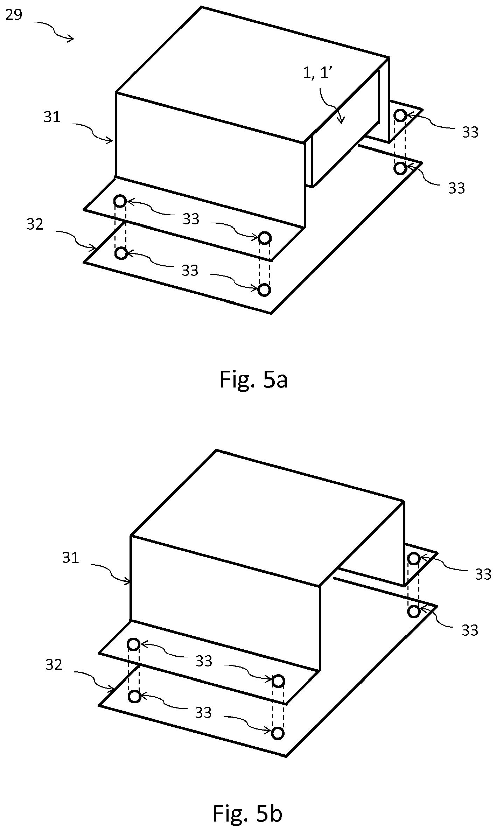

Referring to Figure 5a a pedal system 29 according to embodiments of the present invention comprises a pedal 1, 1' as described hereinbefore and a pedal casing 30 coupled to the pedal surface 2. The casing 30 is shown without the pedal in Figure 5b. The casing 30 has a U-shaped upper part 31 coupled to a flat lower part 32, for example using screws, bolts, or adhesive. For example, the upper and lower parts 31, 32 may comprise corresponding through-holes 33 for receiving screws (now shown) for coupling the upper part 31 to the lower part 32. The casing 30 contacts the pedal 1, 1' only at the pedal surface 2. The pedal casing may be shaped as a click pedal. In this case the foot position is fixed and the influence of a traversing centre of application of force caused by foot movement is be reduced. Strain sensors may therefore not need to be connected diagonally and measurement of medial-lateral forces may be redundant.

Various types of strain gauge sensor can be used according to embodiments of the present invention. Photoelectric gauges or optical flats may be attached in the sensor regions instead of electrical strain gauges. An accelerometer, magnetometer, gyroscope or a combination of minimal two of these sensors may be utilized to measure the pedal angle.

The raw or processed data need not be transmitted in real time, for example the memory may be configured to store all strain gauge data for a particular time period, such as one training ride, and after the time period the processing unit can be coupled to a computing device for transfer of the data.

In some embodiments, the raw strain gauge data is stored in the memory based on the pedalling state, that is, whether the user is pedalling actively, whether the pedal cycle is interrupted, based on the variations in pedal speed within one pedal cycle, etc. This pedalling state information can be derived from measurements from an accelerometer and/or gyroscope disposed on the pedal 1, 1'.

The device receiving raw or processed strain gauge data, that is, the processor and/or the computing device, may be configured to filter the raw or processed strain gauge data using a 3$^{rd}$ order Butterworth filter.

The processing unit comprises a power supply for supplying power to the optional processor, the memory, and the transmission unit.

In an alternative embodiment, dedicated hardware implementations, such as application specific integrated circuits, programmable logic arrays and other hardware devices, can be constructed to implement one or more of the methods described herein. Applications that may include the apparatus and systems of various embodiments can broadly include a variety of electronic and computer systems. One or more embodiments described herein may implement functions using two or more specific interconnected hardware modules or devices with related control and data signals that can be communicated between and through the modules, or as portions of an application-specific integrated circuit. Accordingly, the present system encompasses software, firmware, and hardware implementations.

The power supply is a portable power supply. The power supply may involve the generation of electric power, for example using a mechanical power generator, a fuel cell device, photo-voltaic cells, or other power generating devices. The power supply may include a battery such as a device consisting of two or more electrochemical cells that convert stored chemical energy into electrical energy. The power supply may include one battery or a combination of multiple batteries or other power providing devices. Specially fitted or configured battery types, or standard battery types such as CR 2012, CR 2016, and/or CR 2032 may be used.

In accordance with various embodiments of the present disclosure, methods described herein may be implemented with software programs executable by a computer system. Further, in an exemplary, non-limited embodiment, implementations can include distributed processing, component/object distributed processing, and parallel processing. Alternatively, virtual computer system processing can be constructed to implement one or more of the methods or functionality as described herein.

A computer program (also known as a program, software, software application, script, or code) can be written in any form of programming language, including compiled or interpreted languages, and it can be deployed in any form, including as a standalone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

Processors suitable for the execution of a computer program include, by way of example, both general and special purpose microprocessors, and any one or more processors of any kind of digital computer. Generally, a processor receives instructions and data from a read only memory or a random access memory or both. The essential elements of a computer are a processor for performing instructions and one or more memory devices for storing instructions and data. Generally, a computer also includes, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio player, a Global Positioning System (GPS) receiver, or an apparatus 210 to name just a few. Computer readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

*Example implementation*

A pedal according to embodiments of the present invention was tested. The pedal had the following thickness values: $t_3$ = 15 mm, $t_2$ = 5 mm, $t_1$ = 4 mm. The pedal had a 12 strain gauge setup as for the modified pedal 1'. The pedal comprised an InvenSense MPU-6050 sensor on the underside of the pedal surface for measuring pedal angle. The InvenSense chip contains a MEMS accelerometer and MEMS gyroscope. It accommodates separate 16-bits ADC hardware for the three dimensions.

A calibration process was carried out as described hereinbefore. One hundred measurements were taken in which the pedal was orientated at various angles in the sagittal and frontal plane and different weights were attached. The weights were measured using a balance with a precision of 0.1 gram. The MPU-6050 sensor measures the orientation of the pedal with a precision of 0.1° and isolated forces were calculated in the X', Y' and Z' directions. The maximally applied isolated forces are analogue to the peak pedal forces of a conventional cyclist described by Mornieux et al, "A cycle ergometer mounted on a standard force platform for three-dimensional pedal forces measurement during cycling," Journal of Biomechanics 39(3), pp. 1293-1303, 2005, namely 180N in the anterior-posterior direction, 100N in the medio-lateral direction and 500N in the normal direction. Within this region the pedal's behavior is linear. The hysteresis effect was taken into account by changing the sequencing the loads and comparing the results.

An absolute encoder was used to measure the pedal arm angle. Data acquisition is done by combining National Instruments's cDAQ-9178 chassis with the universal analogue input module NI9219 (National Instruments) for the strain gauges and the universal analogue input module NI9215 (national Instruments) for the encoder. The data acquisition system controlled timing, synchronization and data transfer from sensor to a separate computer. The data was recorded and analyzed with Matlab. A third order Butterworth low-pass filter was applied and mean pedal cycles were determined.

The accuracy of the determined calibration matrix was described by the maximal error percentage of full scale (max. error % FS, equation 6) and the standard error percentage of full scale (std. error % FS, equation 7) to efficiently compare the used calibration method with other studies, such as those described in A. Blandford, "Calibration for the Sensitivity Matrix of the Collins Strain Gauge Balance," Platforms Science Laboratory, Australia, 2004. The maximal error describes the maximal error found between the calculated and measured values whilst the standard error quantifies the amount of variation.

$$max.\,error\,\%\,FS = \frac{Max\left|m_{F_i} - F_i\right|}{FS} * 100 \qquad (6)$$

$$std.\,error\,\%\,FS = \frac{\sqrt{\sum_{i=1}^{N}\left(m_{F_i} - F_i\right)/N-f}}{FS} * 100 \qquad (7)$$

where N=number of samples and f = degrees of freedom of the calibration matrix.

The calculated accuracies are set out in Table 1:

| Direction | Max. error %FS | Std. error %FS |
|-----------|----------------|----------------|
| X | 3.6366 | 0.3280 |
| Y | 3.0854 | 0.5386 |
| Z | 1.6555 | 0.1514 |

The maximal error percentage of full scale is the largest in the X direction (3.6366%), followed by the Y (3.0854%) and the Z direction (1.6555%). The standard error percentage of full scale is the largest in the anterior-posterior direction (0.5386%), followed by the medial-lateral direction (0.3280%) and the proximal-distal direction (0.1514%).

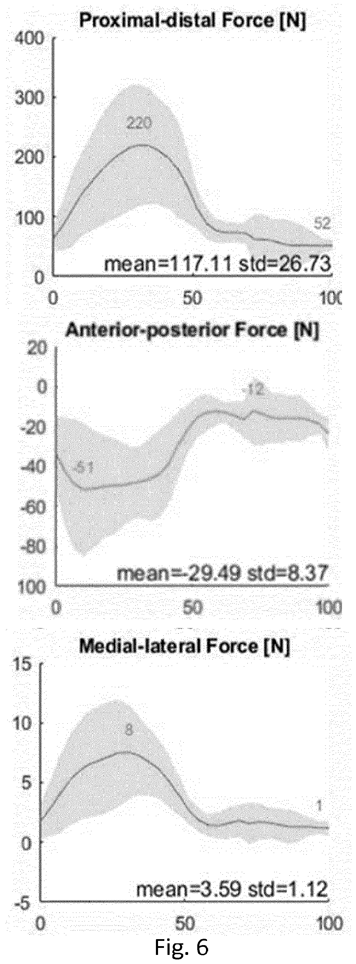

Referring to Figure 6, a typical cycling pattern of a recreational cyclist of 77kg on a women's citybike during 15 minutes of relaxed cycling at approximately 12km/h on smooth pavement is shown. The bike comprises two pedals as described earlier in the "Example implementation" section. The mean power is 170 W and pedaling speed is 50rpm. The seat to pedal distance is set as 108 percent of the inner leg length. The curves present the mean proximal-distal (or normal), anterior-posterior and medial-lateral directional force [N] expressed in function of one pedal cycle [%] where the right pedal starts (0%) and ends (100%) in the upper dead center. The gray area represents two times the standard deviation (95% of all measurements).

It can be seen that the normal, or proximal-distal, force is directed distally during the whole pedal cycle. It is limited when the pedal is in the region of its upper and lower dead center. At 348 degrees the normal force reaches a minimum of 52N. After the dead center it smoothly increases until its maximal value of 220N at 120degrees. In this phase most power is built up (power phase). When the first half of the pedal cycle is completed, the left pedal takes over and a limited force is transmitted over the right pedal (recovery phase). The anterior-posterior force is directed anteriorly during the whole pedal cycle. Similar to the normal force most power is built up in the power phase and least in the recovery. The maximal value is 51N at 48 degrees and the minimal value is 12N at 264 degrees. The maximal anterior-posterior force occurs in the first half of the power phase whilst the maximal normal force occurs 72 degrees later in the second half of the power phase. The minimal anterior-posterior value manifests itself in the first half of the recovery phase whilst the minimal normal value manifests itself 102 degrees later in the second half of the recovery phase. In addition, the medio-lateral forces are directed laterally. The location of the peak values is similar to the normal force. A maximum of 8N is found in the second half of the power phase at 120 degrees and a minimum of 1N is found in the second half of the recovery phase at 348 degrees. Mornieux et al described a standard error of -3.06% for the vertical dimension, -3.37% for the horizontal dimension and -2.81% for the lateral dimension. The standard error percentage of full scale achieved using the pedal in this example is a factor of 10 times smaller, therefor the accuracy of the static calibration is satisfactory. A higher accuracy can be obtained by calibration with specific calibration equipment like a three-dimensional tensile tester. Furthermore an increased amount of samples enlarges the calibration accuracy.

The results of Figure 6 can be compared with the results in Figure 3 of G. Mornieux et al., "A cycle ergometer mounted on a standard force platform for three-dimensional pedal forces measurement during cycling," Journal of Biomechanics 39(3), pp. 1293-1303, 2005. It can be seen that the unidirectional patterns are considerably similar. Most power is built up in the power phase and least in the recovery. The maximal vertical and medial-lateral force is found in the second half of the power phase which matches the results of the present study. The maximal anterior-posterior force is found at 90° in the results of Mornieux, which differs from the results of the present study (48°) caused by an extra local drop in the graph due to user-independent pedal technique, though the main inflection point is similar. The amplitude ratios of Mornieux match the results of the present study, nevertheless the amplitude is enlarged due to the intensity of cycling. Mornieux et al. tested at a higher power output (300W versus 170W) and higher rpm (90rpm instead of 50rpm). The direction of anterior-posterior forces differ due to inter-individual variations in ankle angle. The test subject of the present study adopted a continue dorsiflexion which leads to only negative X-values.

It is to be understood that although preferred embodiments, specific constructions and configurations, as well as materials, have been discussed herein for devices according to the present embodiment, various changes or modifications in form and detail may be made without departing from the scope and technical teachings of this description. For example, any formulas given above are merely representative of procedures that may be used. Functionality may be added or deleted from the block diagrams and operations may be interchanged among functional blocks. Steps may be added or deleted to methods described within the scope of the present embodiments.

Although some of the strain sensors are described as being located on an inner surface of the pedal frame, the present invention is not limited thereto. Provided that, for each pair of sensors, one sensor is arranged such that it contracts under an applied strain in a particular direction and the other sensor expands under the same applied strain, the sensors in a pair can be located on any inner or outer surface of the pedal frame.

Although embodiments hereinbefore described comprise at least two sensors for each strain direction to be sensed, a minimum of one sensor can be provided for each strain direction to be sensed according to embodiments of the present invention. That is, the pedal frame supports minimally a first strain sensor configured to detect strain in a first direction and a second strain sensor configured to detect strain in a second direction substantially perpendicular to the first direction. In some embodiments, the pedal frame also supports a third strain sensor configured to detect strain in a third direction substantially perpendicular to the first direction and the third direction.

A pedal according to embodiments of the present invention can be used to inform bicycle design, posture, pedal technique; can be used to determine muscle fatigue or joint burden to optimize cycling comfort.

**Claims**

1.  A pedal configured to couple to a pedal spindle along a coupling axis, the pedal comprising a pedal surface for application of force by a user and a pedal frame coupled to the surface, the pedal frame supporting a first strain sensor configured to detect strain in a first direction and a second strain sensor configured to detect strain in a second direction substantially perpendicular to the first direction; wherein the first strain sensor is disposed on a first face of the pedal frame, the pedal frame having a first frame thickness at the first face in the first direction; wherein the second strain sensor is disposed on a second face of the pedal frame, the pedal frame having a second frame thickness at the second face in the second direction; wherein the first frame thickness is less than the second frame thickness.

2.   A pedal according to claim 1, wherein the first direction is substantially parallel to the coupling axis.

3.   A pedal according to claim 2, wherein the second direction is substantially perpendicular to the pedal surface.

4.   A pedal according to claim 2, wherein the second direction is substantially parallel to the pedal surface.

5.   A pedal according to claim 3, further comprising a third strain sensor configured to detect strain in a third direction substantially perpendicular to the first direction and the second direction, wherein the third strain sensor is disposed on a third face of the pedal frame, the pedal frame having a third frame thickness at the third face in the third direction, and wherein the third frame thickness is greater than the second frame thickness.

6.   A pedal according to claim 1, wherein the first direction is substantially perpendicular to the pedal surface and the second direction is substantially perpendicular to the coupling axis.

7.   A pedal according to any preceding claim further comprising a fourth strain sensor configured to detect strain in the first direction, a fifth strain sensor configured to detect strain in the second direction, and a sixth strain sensor configured to detect strain in the third direction, wherein the first and the fourth strain sensors form a first pair of strain sensors configured to detect strain in the first direction, the second and fifth strain sensors form a second pair of strain sensors configured to detect strain in the second direction, and the third and sixth strain sensors form a third pair of strain sensors configured to detect strain in the third direction.

8.   A pedal according to claim 7, further comprising a fourth pair of strain sensors configured to detect strain in the first direction, a fifth pair of strain sensors configured to detect strain in the second direction, and a sixth pair of strain sensors configured to detect strain in the third direction.

9.   A pedal according to claim 7 or 8, wherein each one of a strain sensor in a pair of strain sensors is arranged so as to contract when a force is applied in the direction in which the pair of strain sensors is configured to detect strain, and the other strain sensor in the pair of strain sensors is arranged so as to expand when the same force is applied.

10.   A pedal according to any preceding claim comprising an accelerometer and/or a gyroscope.

11.   A pedal according to any preceding claim comprising a processing unit electrically coupled to the strain sensors and optionally to the accelerometer and/or the gyroscope, wherein the processing unit is configured to receive strain voltage data from the strain sensors and optionally motion data from the accelerometer and/or gyroscope.

12.   A pedal according to any preceding claim comprising a foot positioning system.

13.   A pedal according to any preceding claim having a thickness at a location of a strain sensor, in a direction perpendicular to the pedal surface on which the strain sensor is disposed, of no more than 20mm.

14.   A pedal system comprising a pedal according to any preceding claim and a pedal casing coupled to the pedal.

15.   A force sensing system comprising a pedal according to any of claims 1 to 13 or a pedal system according to claim 14, and a processing module configured to receive data from the pedal, the processing module being configured to determine a force exerted on the pedal along at least one axis in dependence upon data received from the pedal.

Fig. 1a

Fig. 1b

Fig. 1c

Fig. 1e

Fig. 2a

Fig. 2b

Fig. 3a

Fig. 3b

Fig. 3c

Fig. 4

Fig. 5a

Fig. 5b

Fig. 6

Europäisches
Patentamt

European
Patent Office

Office européen
des brevets

## EUROPEAN SEARCH REPORT

Application Number

EP 19 17 2625

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 514 663 A1 (HERBERT JENNY [AT]; AUGUSTIN HEINZ [CH]) 24 October 2012 (2012-10-24) * paragraphs [0019], [0029], [0030], [0031], [0033], [0037]; figures 1,3,4,5,12 * | 1-15 | INV. B62M3/08 A63B22/06 |
| A | TW M 543 203 U (LO CHIU-HSIANG [TW]) 11 June 2017 (2017-06-11) * abstract; figures 1,2 * | 1-15 | |
| A | US 2014/251079 A1 (CHEN CHUNG-I [TW] ET AL) 11 September 2014 (2014-09-11) * paragraph [0022]; figure 3 * | 1-15 | |

TECHNICAL FIELDS
SEARCHED (IPC)

B62M
A63B
B62K

The present search report has been drawn up for all claims

| Place of search | Date of completion of the search | Examiner |
|---|---|---|
| The Hague | 27 September 2019 | Huber, Florian |

EPO FORM 1503 03.82 (P04C01)

## ANNEX TO THE EUROPEAN SEARCH REPORT
## ON EUROPEAN PATENT APPLICATION NO.

EP 19 17 2625

This annex lists the patent family members relating to the patent documents cited in the above-mentioned European search report.
The members are as contained in the European Patent Office EDP file on
The European Patent Office is in no way liable for these particulars which are merely given for the purpose of information.

27-09-2019

| Patent document cited in search report | | Publication date | Patent family member(s) | | Publication date |
|---|---|---|---|---|---|
| EP 2514663 | A1 | 24-10-2012 | AT | 510563 A4 | 15-05-2012 |
| | | | EP | 2514663 A1 | 24-10-2012 |
| TW M543203 | U | 11-06-2017 | NONE | | |
| US 2014251079 | A1 | 11-09-2014 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MORNIEUX et al.** A cycle ergometer mounted on a standard force platform for three-dimensional pedal forces measurement during cycling. *Journal of Biomechanics,* 2005, vol. 39 (3), 1293-1303
- **A. BLANDFORD.** Calibration for the Sensitivity Matrix of the Collins Strain Gauge Balance. Platforms Science Laboratory, 2004

- **G. MORNIEUX et al.** A cycle ergometer mounted on a standard force platform for three-dimensional pedal forces measurement during cycling. *Journal of Biomechanics,* 2005, vol. 39 (3), 1293-1303